# EUROPÄISCHE PATENTANMELDUNG

(11) **EP 2 618 174 A1**
(43) Veröffentlichungstag der Anmeldung: **24.07.2013**
(21) Anmeldenummer: 13151233.7
(22) Anmeldetag: 15.01.2013
(51) Int. Cl.: G01S 7/40, G01S 7/35

(54) **Vorrichtung mit einem spannungsgesteuerten Oszillator und einer Schulungsanodnung zum Ansteuern des Oszillators**

(30) Priorität: 19.01.2012 DE 102012100427
(71) Anmelder: Hella KGaA Hueck & Co., 59552 Lippstadt (DE); von Rhein, Andreas, 33154 Salzkotten (DE)
(72) Erfinder: Die Erfindernennung liegt noch nicht vor

(57) **Zusammenfassung**

Die vorliegende Erfindung betrifft eine Vorrichtung, insbesondere einen Radarsensor,
- mit einem spannungsgesteuerten Oszillator (O) zum Erzeugen eines hochfrequenten Signals mit einer Istfrequenz,
- mit einer Schaltungsanordnung zum Ansteuern des Oszillators (O), nämlich zum Einstellen einer Spannung zum Steuern des Oszillators (O), wobei jedem Wert einer Sollfrequenz ein Spannungswert der zum Steuern des Oszillators (O) vorgesehenen Spannung zugeordnet ist,
- wobei die Schaltungsanordnung zum Ansteuern des Oszillators (O) einen Signalerzeuger (DSP) aufweist, wobei mit dem Signalerzeuger (DSP) zumindest zwei Signale, nämlich zwei digitale Signale, zwei pulsweitenmodulierte Signale oder ein digitales und ein pulsweitenmoduliertes Signal erzeugbar sind und
- dass der Signalerzeuger (DSP) wenigstens einen ersten Ausgang aufweist, an welchem ein digitales Signal bereitstellbar ist oder zwei digitale Signale bereitstellbar sind und/oder wenigstens einen zweiten Ausgang aufweist, an welchem ein pulsweitenmoduliertes Signal bereitsstellbar ist.

## Beschreibung

Die Erfindung betrifft eine Vorrichtung, insbesondere einen Radarsensor, z. B. für ein Kraftfahrzeug,
- mit einem spannungsgesteuerten Oszillator zum Erzeugen eines hochfrequenten Signals mit einer Istfrequenz,
- mit einer Schaltungsanordnung zum Ansteuern des Oszillators, nämlich zum Einstellen einer Spannung zum Steuern des Oszillators, wobei jedem Wert einer Sollfrequenz ein Spannungswert der zum Steuern des Oszillators vorgesehenen Spannung zugeordnet ist,
- wobei die Schaltungsanordnung zum Ansteuern des Oszillator einen Signalerzeuger aufweist.

Kraftfahrzeuge werden heute mehr und mehr mit Radarsystemen ausgestattet, um die Entfernung von Objekten zum Kraftfahrzeug und die Relativgeschwindigkeit der Objekte zum Kraftfahrzeug zu erfassen. Die ermittelten Entfernungen und Relativgeschwindigkeiten können in verschiedenen Fahrassistenzsystemen genutzt werden. Bei den Fahrassistenzsystemen kann es sich beispielsweise um eine automatische Leuchtweitenregelung, eine automatische Wahl der Lichtverteilung, ein automatisches Einstellen von vertikalen oder horizontalen Hell-Dunkel-Grenzen, um Bremsassistenten oder anderes handeln. In diesen Radarsystemen kann eine eingangs genannte Vorrichtung mit einem spannungsgesteuerten Oszillator verwendet werden.

Die europäische Patentschrift mit der Veröffentlichungsnummer EP 1 325 350 B1 offenbart ein Verfahren und eine Vorrichtung zur Bestimmung von Abstand und Relativgeschwindigkeit eines von einem Kraftfahrzeug entfernten Objektes. Die Patentschrift schlägt ein FMFSK-Verfahren (*frequency modulated frequency shift keying*) vor. Die das Verfahren verwendende Vorrichtung weist einen spannungsgesteuerten Oszillator auf, mit dem mehrere zu sendende Signale erzeugt werden. Jedes Signal hat mehrere Abschnitte mit unterschiedlichen aber während des Abschnitts konstanten Frequenzen. Die Abschnitte werden nacheinander gesendet, wobei die Frequenz der Signalabschnitte eines Signals von Abschnitt zu Abschnitt erhöht wird. Die Abschnitte eines Signals werden allerdings nicht unmittelbar hintereinander gesendet. Vielmehr folgt auf jeden Abschnitt eines der Signale ein Abschnitt eines anderen Signals. Der Wechsel zwischen den Signalabschnitten erfolgt dabei in stets gleicher Reihenfolge und wiederholt sich in jedem Takt. Man erhält dadurch ineinander verschachtelte Signalabschnitte. Während eines Signalabschnitts wird die Frequenz des Signals stets gehalten.

Aus der Offenlegungsschrift mit der Veröffentlichungsnummer DE 10 2009 048 112 A1 ist ein alternatives Verfahren bekannt, bei dem die Frequenz eines Signals während eines Signalabschnittes im Unterschied zu dem aus der Patentschrift EP 1 325 350 B1 bekannten Verfahren nicht konstant bleibt, sondern linear steigt oder sinkt. Ein entsprechendes Verfahren ist auch aus der Patentschrift mit der Veröffentlichungsnummer EP 0 312 601 B1 bekannt.

Um bei diesen Verfahren ein möglichst gutes Ergebnis zu erreichen, können nur spannungsgesteuerte Oszillatoren mit gewissen Grundeigenschaften verwendet werden, die insbesondere die Steilheit, die Krümmung, die Alterung und die Temperaturdrift des spannungsgesteuerten Oszillators betreffen. Bei der Herstellung einer Vorrichtung, wie sie in den Dokumenten beschrieben werden, werden daher alle spannungsgesteuerten Oszillatoren vor der Montage vermessen und nur geeignete gesteuerte Oszillatoren mit gleichen Eigenschaften ausgewählt.

Außerdem werden während des Betriebs regelmäßig Zyklen in den laufenden Betrieb eingeschoben, in denen die spannungsgesteuerten Oszillatoren kalibriert werden, um so zum Beispiel eine Temperaturdrift zu kompensieren. Die Kalibrierung erfolgt mittels einer Phasenregelschleife (auch als "phase-locked loop" (PLL) bekannt). Die zur Kalibrierung vorgesehene Phasenregelschleife umfasst eine Schaltungsanordnung zum Ansteuern des Oszillators, nämlich zum Einstellen der Spannung zum Steuern des Oszillators.

Während der Kalibrierzyklen können die Vorrichtungen nicht zum Erzeugen von Radarsignalen zur Messung der Entfernung und der Relativgeschwindigkeit verwendet werden. Dieses ist nicht von Vorteil für die Fahrassistenzsysteme, in denen in dieser Zeit keine aktuellen Daten aus dem Straßenraum zur Verfügung gestellt werden können. Mit diesem Problem befasst sich bereits die deutsche Patentanmeldung der Hella KGaA Hueck & Co mit dem Aktenzeichen DE 10 2010 061 041 vom 06.12.2010.

In der Anmeldung DE 10 2010 061 041 ist offenbart, dass die Schaltungsanordnung zum Ansteuern des Oszillators einen digitalen Signalprozessor aufweist, der einen Wert ermittelt und digital an einem Ausgang bereitstellt und dass der digital am Ausgang des Signalprozessors bereitgestellte Wert über einen Digital-Analog-Umsetzer in ein analoges Spannungssignal gewandelt wird, dass dem spannungsgesteuerten Oszillator zugeführt wird. In der Anmeldung ist nicht beschrieben, wie das Signal am Ein- oder Ausgang aussieht, insbesondere welchen Verlauf das Signal am Ein- oder Ausgang des Oszillator hat oder wie die Eingangssignale erzeugt werden.

Hier setzt die Erfindung an.

Der Erfindung liegt die Aufgabe zu Grunde, eine Vorrichtung der eingangs genannten Art so zu verbessern, dass mittels einer einfach ausgestalteten Schaltungsanordnung eine Ansteuerung des spannungsgesteuerten Oszillators zur Erzeugung eines Ausgangssignals möglich ist, wie es in der Offenlegungsschrift DE 10 2009 048 112 offenbart ist.

Diese Aufgabe wird erfindungsgemäß dadurch gelöst, dass mit dem Signalerzeuger zumindest zwei Signale, nämlich zwei digitale Signale, zwei pulsweitenmodulierte Signale oder ein digitales und ein pulsweitenmoduliertes Signal erzeugbar sind und dass der Signalerzeuger wenigstens einen ersten Ausgang aufweist, an welchem ein digitales Signal bereitstellbar ist oder zwei digitale Signale bereitstellbar sind und/oder wenigstens einen zweiten Ausgang aufweist, an welchem ein pulsweitenmoduliertes Signal bereitsstellbar ist.

Der Signalerzeuger kann also einen ersten Ausgang haben, an dem zwei digitale Signale bereitgestellt werden. Ebenso kann er zwei erste Ausgänge haben, an denen jeweils ein digitales Signal bereitstellbar ist. Ebenso ist es möglich, das der Signalerzeuger auch einen ersten Ausgang für ein digitales Signal und einen zweiten Ausgang für ein pulsweitenmoduliertes Signal hat. Außerdem kann der Signalerzeuger zwei zweite Ausgänge für je ein pulsweitenmoduliertes Signal aufweisen.

Sind am ersten Ausgang des Signalerzeugers zwei digitale Signale abgreifbar, kann die Schaltungsanordnung einen dualen Digital-Analog-Umsetzer aufweisen, der einen Eingang hat, der mit dem ersten Ausgang des Signalerzeugers verbunden ist. Der duale Digital-Analog-Umsetzer kann zwei Ausgänge haben, wobei an jedem Ausgang ein analoges Signal bereitgestellt werden kann, dass vom dualen Digital-AnalogWandler aus einem der beiden am Eingang des dualen Digital-Analog-Umsetzers anliegenden digitalen Signale gewandelt werden kann. Die beiden Ausgänge des dualen Digital-Analog-Umsetzers können mit Eingängen eines Verknüpfungsglieds verbunden sein. Vorzugsweise ist einer der beiden Ausgänge oder sind beide der beiden Ausgänge über Tiefpassfilter mit den Eingängen des Verknüpfungsglieds verbunden. Durch die Filterung ist es möglich, das oder die analogen Signal an den Ausgängen des dualen Digital-Analog-Umsetzers zu glätten. Die Glättung kann erforderlich sein, da das analoge Signal oder die analogen Signale am Ausgang des dualen Digital-Analog-Umsetzers je nach Auflösung nicht frei von Sprüngen ist. Die Signale sollen aber möglichst frei Sprüngen sein. Nur gewollte und auch in einem der digitalen Signale angelegte Sprünge sollen auch in den analogen Signalen erkennbar sein. Durch die Glättung mittels eines Tiefpassfilters oder ein anderes geeignetes Filter können unerwünschte Sprünge unterdrückt werden.

Ist an dem wenigstens einen ersten Ausgang des Signalerzeugers ein digitales Signal abgreifbar, kann die Schaltungsanordnung einen Digital-Analog-Umsetzer aufweisen, der einen Eingang hat, der mit einem ersten Ausgang des Signalerzeugers verbunden ist. Ebenso kann die Schaltungsanordnung zwei Digital-Analog-Umsetzer aufweisen, deren Eingänge mit den ersten Ausgängen des Signalerzeugers verbunden sind. Der wenigstens eine Digital-Analog-Umsetzer kann einen Ausgang haben. An den Ausgang des Digital-Analog-Umsetzers kann ein analoges Signal bereitgestellt werden, das aus dem am Eingang des Digital-Analog-Umsetzers anliegenden digitalen Signal gewandelt wird. Ist ein zweiter Digital-Analog-Umsetzer vorgesehen, kann auch an diesem ein analoges Signal bereitgestellt werden, das aus dem am Eingang des zweiten Digital-Analog-Umsetzer anliegenden digitalen Signal erzeugt wird. Der Ausgang des wenigstens einen Digital-Analog-Umsetzers kann ggf. unter Zwischenschaltung eines Tiefpassfilters mit einem Eingang des Verknüpfungsglieds verbunden sein. Mit dem Tiefpassfilter kann das Ausgangssignal des Digital-Analog-Umsetzers bzw. mit den Tiefpassfiltern können die Ausgangsignale der Digital-Analog-Umsetzer geglättet werden, um unerwünschte Sprünge im analogen Signal unterdrücken.

Weist der Signalerzeuger einen oder zwei zweite Ausgänge auf, an welchem ein pulsweitenmoduliertes Signal bereitsstellbar ist, kann der wenigstens eine zweite Ausgang ggf. unter Zwischenschaltung wenigstens eines Tiefpassfilters mit einem Eingang des Verknüpfungsglieds verbunden sein. Mit dem Tiefpassfilter kann das pulsweitenmodulierte Signal oder mit den Tiefpassfiltern können die pulsweitenmodulierten Signale geglättet werden, um unerwünschte Stufen im analogen Signal glätten.

Die an den beiden Eingängen des Verknüpfungsglieds bereitstellbaren analogen oder pulsweitenmodulierten Signale können in dem Verknüpfungsglied zu einem Steuersignal für den spannungsgesteuerten Oszillator zusammengesetzt werden.

Bei dem Signalerzeuger kann es sich um einen digitalen Signalprozessor handeln.

Das Verknüpfungsglied kann ein Additionsglied sein, in dem die beiden am Eingang anliegenden Signale addiert werden können. Das Verknüpfungsglied kann zusammen mit dem Oszillator Teil eines MMIC (monolythic microwave integrated circuit; dt. monolithischer Mikrowellenschaltkreis) sein. Ist das Verknüpfungsglied Teil des MMIC, kann es dadurch realisiert werden, dass eine für die Schwingungserzeugung wichtige Diode asymmetrisch in zwei Teile zerlegt ist. Die am Eingang des MMIC anliegenden Signale sind mit je einem der Teile der Diode verbunden. Durch die asymmetrische Aufteilung erhält man einen Spannungseingang, welcher unempfindlicher auf Spannungsänderungen reagiert und einen welcher unempfindlicher auf Spannungsänderungen reagiert. Die Diode verknüpft die anliegenden Signale zu Erzeugung des Steuersignals für den Oszillator des MMICs.

Wird ein Additionsglied außerhalb eines MMICs benutzt, kann diese das Verhalten der beschriebenen Diode des MMIC nachempfinden. D.h. die schnelle Spannungsmodulation wird vor oder bei der Addierung niedriger gewichtet, als das langsame Signal zur Erzeugung der Kippschwingung oder der Sägezahnschwingung.

Eine erfindungsgemäße Vorrichtung kann folgendermaßen betrieben werden: Vom Signalerzeuger können zwei Signale erzeugt werden, die ggf. in ein analoges Signal gewandelt und in dem Verknüpfungsglied zu einem Steuersignal für den spannungsgesteuerten Oszillator zusammengesetzt werden.Der spannungsgesteuerte Oszillator kann ein hochfrequentes Signal erzeugen, dass in eine periodische Kippschwingung oder eine periodische Dreieckschwingung mit einer ersten Frequenz und ein periodisches Signal mit zwei oder mehr aufeinander folgende Stufen mit einer zweiten Frequenz zerlegt werden kann, wobei die zweite Frequenz ein ganzzahliges Vielfaches der ersten Frequenz ist.

Ein idealer spannungsgesteuerter Oszillator hat eine lineare Kennlinie, d.h. dass der Oszillator für jede Erhöhung des Potentials am Eingang des Oszillators um eine Spannung unabhängig von der Höhe des Potentials am Eingang die Frequenz des Ausgangssignals um gleiche Beträge erhöht wird. Soll das hochfrequente Signal am Ausgang des Oszillators eine stetig steigende Frequenz haben, muss am Eingang des idealen Oszillators eine Kippschwingung anliegen. Bei realen spannungsgesteuerten Oszillatoren liegt in der Regel aber kein lineare Kennlinie vor. Die Kennlinie ist vielmehr gekrümmt. Um am Ausgang eines realen Oszillators ein Signal mit stetig steigender Frequenz zu erhalten, muss das entsprechende Steuersignal am Eingang des Oszillator einen gekrümmten Spannungsverlauf haben. Dieser kann durch den Signalerzeuger einer erfindungsgemäßen Vorrichtung entsprechend erzeugt werden.

Der Signalerzeuger einer erfindungsgemäßen Vorrichtung kann so eingerichtete, insbesondere programmiert sein, dass ein Steuersignal für den Oszillator bereitgestellt wird, welches den Oszillator zur Erzeugung eines hochfrequenten Signals ansteuert, dass einerseits in das periodische Signal mit zwei oder mehr aufeinander folgende Stufen mit der zweiten Frequenz und andererseits in eine Sägezahnschwingung oder eine Kippschwingung oder in eine beliebige Kombination von Abschnitten einer Sägezahnschwingung, einer Kippschwingung und eines Gleichspannungssignal zerlegt werden kann.

Anhand der beigefügten Zeichnungen wird die Erfindung nachfolgend näher erläutert. Dabei zeigt:
- Fig. 1: eine erste erfindungsgemäße Vorrichtung mit einem dualen Digital-Analog-Umsetzer und einem Additionsglied als Verknüpfungsglied,
- Fig. 2: eine zweite erfindungsgemäße Vorrichtung mit einem dualen Digital-Analog-Umsetzer und einem Verknüpfungsglied in einem MMIC,
- Fig. 3: eine dritte erfindungsgemäße Vorrichtung mit einem Signalerzeuger mit Ausgängen für pulsweitenmodulierte Signal und einem Additionsglied als Verknüpfungsglied und
- Fig. 4: eine dritte erfindungsgemäße Vorrichtung mit einem Signalerzeuger mit Ausgängen für pulsweitenmodulierte Signal und einem Verknüpfungsglied in einem MMIC.

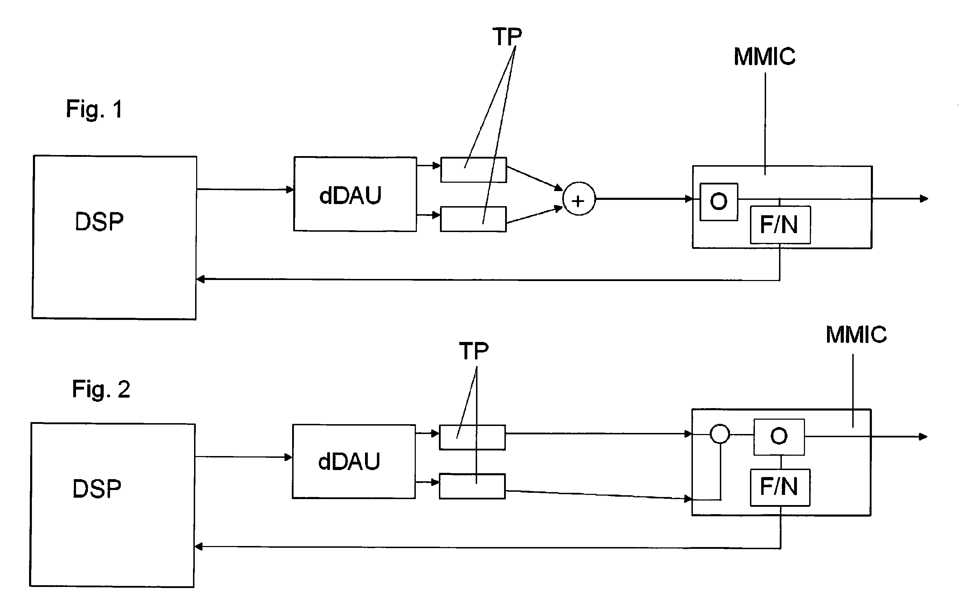

Die in den Figuren 1 bis 4 dargestellten erfindungsgemäßen Vorrichtungen weisen einen Signalerzeuger auf, der von je einem digitalen Signalprozessor DSP gebildet wird. In den digitalen Signalprozessoren DSP werden Signale gebildet, die nach einer Weiterverarbeitung außerhalb der digitalen Signalprozessoren DSP zur Ansteuerung von spannungsgesteuerten Oszillatoren O verwendet werden. Die spannungsgesteuerten Oszillatoren O sind Teile von monolithischen Mikrowellenschaltkreisen MMIC, an deren ersten Ausgängen das von den Oszillatoren O entsprechend der Ansteuerung erzeugte hochfrequente Signal anliegt. Die monolithischen Mikrowellenschaltkreise MMIC umfassen neben den spannungsgesteuerten Oszillatoren O Frequenzteiler N, die einerseits mit den Oszillatoren O und andererseits mit einem zweiten Ausgang des monolithischen Mikrowellenschaltkreises MMIC verbunden sind. Mit den Frequenzteilern N wird die Frequenz des hochfrequenten Signals herabgesetzt und das Signal herabgesetzter Frequenz dem zweiten Ausgang zugeführt. Die zweiten Ausgänge der monolithischen Mikrowellenschaltkreise MMIC sind mit einem Eingang der digitalen Signalprozessoren DSP verbunden. Mit dieser Verbindung ist eine Regelung der Frequenz der Signale an den Ausgängen der Oszillatoren O und eine Kalibrierung der Oszillatoren O möglich. Der Aufbau einer solchen Regelung beziehungsweise Kalibrierung ist in der Patentanmeldung 10 2010 061 041.0beschrieben.

Die in den Figuren 1 bis 4 dargestellten erfindungsgemäßen Vorrichtungen unterscheiden sich durch die Verbindungen von den digitalen Signalprozessoren DSP zu den monolithischen Mikrowellenschaltkreise MMIC. Außerdem werden je nach Beispiel an den digitalen Signalprozessoren DSP unterschiedliche Ausgänge und bei den monolithischen Mikrowellenschaltkreisen MMIC die unterschiedlichen Eingänge benutzt.

Die in der Figur 1 dargestellte erfindungsgemäße Vorrichtung weist einen digitalen Signalprozessor DSP auf, der einen ersten Ausgang hat, an welchem zwei digitale Signale anliegen können. Diese digitalen Signale können einem dualen Digital-Analog-Umsetzer dDAU zugeführt werden, dessen Eingang dazu mit dem ersten Ausgang des digitalen Signalprozessors DSP verbunden ist. Der duale Digital-Analog-Umsetzer dDAU weist zwei analoge Ausgänge auf, die über Tiefpassfilter einem Additionsglied zugeführt sind. An den zwei analogen Ausgängen werden vom dualen Digital-Analog-Umsetzer dDAU zwei analoge Signale bereitgestellt, die aus den beiden digitalen, am Eingang des dualen Digital-Analog-Umsetzers dDAU anliegenden Signalen erzeugt werden. Das an einem ersten der beiden Ausgänge des Digital-Analog-Umsetzers dDAU anliegende Signal beschreibt eine periodische Kippschwingung, während das an dem zweiten der beiden Ausgänge des Digital-Analog-Umsetzers dDAU anliegende Signal periodisch aufeinander folgende Stufen beschreibt, bei dem während einer Stufe die Frequenz konstant bleibt, die Frequenz aber von Stufe zu Stufe erhöht wird. Die Frequenz des analogen Signals am zweiten Ausgang des dualen Digital-Analog-Umsetzers dDAU beträgt ein ganzzahliges Vielfaches, zum Beispiel das 512-fache der Frequenz des analogen Signals, dass am ersten Ausgang des dualen Digital-Analog-Umsetzers dDAU anliegt.

Um eine den analogen Signalen innewohnende Welligkeit zu unterdrücken, sind den Ausgängen Tiefpassfilter TP nachgeordnet, die entsprechend der Frequenz der analogen Signale angepasst sind.

Mit dem Additionsglied werden die beiden analogen Signale addiert, so dass sich ein Signal ergibt, wie es zum Beispiel aus dem Dokument DE 10 2009 048 112 A 1 offenbart ist.

Die in der Figur 2 dargestellte erfindungsgemäße Vorrichtung unterscheidet sich von der erfindungsgemäßen Vorrichtung gemäß der Figur 1 dadurch, dass eine Verknüpfungsstelle innerhalb des monolithischen Mikrowellenschaltkreises MMIC anstelle eines Additionsglieds genutzt wird, um die vom dualen Digital-Analog-Umsetzer dDAU bereitgestellten und von den Tiefpassfiltern gefilterten analogen Signale zu verknüpfen. Die beiden analogen Signale werden in dem monolithischer Mikrowellenschaltkreis MMIC über zwei Eingänge zugeführt. Ein erster Eingang, nämlich der Eingang an dem die Kippschwingung anliegt, wird bei anderen Verwendungen des monolithischen Mikrowellenschaltkreises MMIC für eine grobe Einstellung des Oszillators verwendet. Ein zweiter Eingang, nämlich der Eingang an dem die periodisch aufeinander folgenden Stufen anliegen, wird bei anderen Verwendungen des monolithischen Mikrowellenschaltkreises MMIC für eine feine Einstellung des Oszillators verwendet.

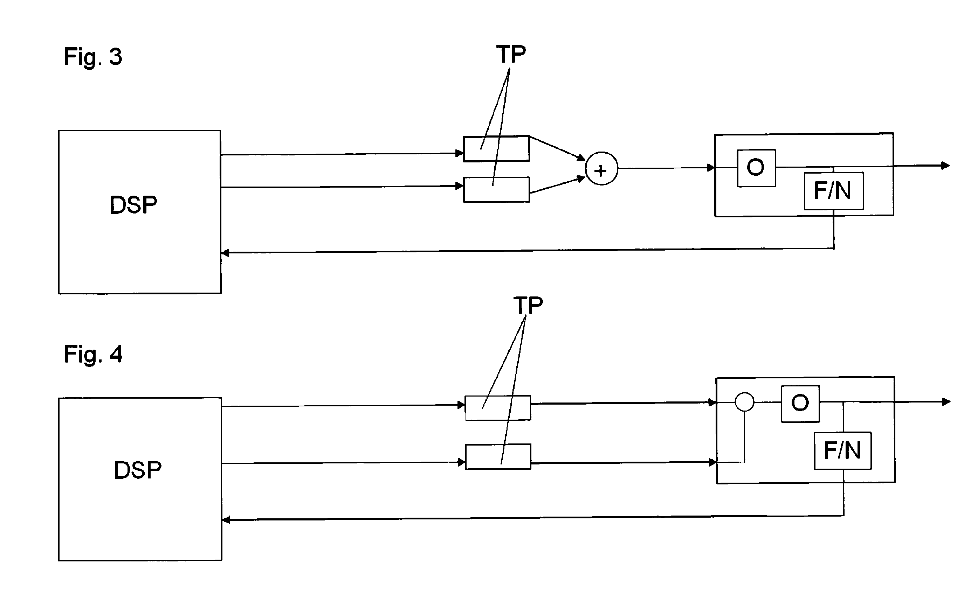

Die in der Figur 3 dargestellte erfindungsgemäße Vorrichtung unterscheidet sich von der erfindungsgemäßen Vorrichtung gemäß der Figur 1 dadurch, dass andere Ausgänge des digitalen Signalprozessors DSP verwendet werden, nämlich zwei Ausgänge für pulsweitenmodulierte Signale. An dem ersten der beiden Ausgänge des digitalen Signalprozessors DSP liegt ein pulsweitenmoduliertes Signal an, welches eine Kippschwingung beschreibt. An dem zweiten der beiden Ausgänge des digitalen Signalprozessors DSP liegt ein pulsweitenmoduliertes Signal an, welches die periodisch aufeinander folgenden Stufen beschreibt. Beide Signale haben eine Welligkeit, die durch die nachgeschalteten Filter TP unterdrückt wird. Die Ausgänge der Filter TP sind an einem Addierglied zusammengeführt, dessen Ausgang mit einem Eingang des monolithischen Mikrowellenschaltkreises MMIC verbunden ist.

Die in der Figur 4 dargestellte erfindungsgemäße Vorrichtung unterscheidet sich von der erfindungsgemäßen Vorrichtung gemäß der Figur 3 dadurch, dass ähnlich wie bei der erfindungsgemäßen Vorrichtung gemäß Figur 2 kein Addierglied genutzt wird, sondern die beiden Signale innerhalb des monolithischen Mikrowellenschaltkreises MMIC verknüpft werden. Dazu werden wie bei der Vorrichtung gemäß der Fig. 2 ein Eingang für eine grobe Einstellung des Oszillators und ein Eingang für eine feine Einstellung des Oszillators genutzt.

### Bezugszeichenliste

- O: Oszillator
- MMIC: monolithischer Mikrowellenschaltkreis
- DSP: digitaler Signalprozessor
- dDAU: dualer Digital-Analog-Umsetzer
- TP: Tiefpassfilter

## Patentansprüche

1. Vorrichtung, insbesondere Radarsensor,
- mit einem spannungsgesteuerten Oszillator (O) zum Erzeugen eines hochfrequenten Signals mit einer Istfrequenz,
- mit einer Schaltungsanordnung zum Ansteuern des Oszillators (O), nämlich zum Einstellen einer Spannung zum Steuern des Oszillators (O), wobei jedem Wert einer Sollfrequenz ein Spannungswert der zum Steuern des Oszillators (O) vorgesehenen Spannung zugeordnet ist,
- wobei die Schaltungsanordnung zum Ansteuern des Oszillators (O) einen Signalerzeuger (DSP) aufweist,
**dadurch gekennzeichnet,**
- **dass** mit dem Signalerzeuger (DSP) zumindest zwei Signale, nämlich zwei digitale Signale, zwei pulsweitenmodulierte Signale oder ein digitales und ein pulsweitenmoduliertes Signal erzeugbar sind und
- **dass** der Signalerzeuger (DSP) wenigstens einen ersten Ausgang aufweist, an welchem ein digitales Signal bereitstellbar ist oder zwei digitale Signale bereitstellbar sind und/oder wenigstens einen zweiten Ausgang aufweist, an welchem ein pulsweitenmoduliertes Signal bereitsstellbar ist.

2. Vorrichtung nach Anspruch 1, **dadurch gekennzeichnet, dass** am ersten Ausgang des Signalerzeugers (DSP) die zwei digitalen Signale abgreifbar sind und dass die Schaltungsanordnung einen dualen Digital-Analog-Umsetzer (dDAU) aufweist, der einen Eingang hat, der mit dem ersten Ausgang des Signalerzeugers (DSP) verbunden ist.

3. Vorrichtung nach Anspruch 2, **dadurch gekennzeichnet, dass** der duale Digital-Analog-Umsetzer (dDAU) zwei Ausgänge hat, wobei an jedem Ausgang ein vom dualen Digital-Analog- Umsetzer (dDAU) aus einem der beiden am Eingang des Digital-Analog-Umsetzers (dDAU) anliegenden digitalen Signale gewandeltes analoges Signal bereitstellbar ist.

4. Vorrichtung nach Anspruch 3, **dadurch gekennzeichnet, dass** die beiden Ausgänge des dualen Digital-Analog-Umsetzers (dDAU) ggf. unter Zwischenschaltung eines Tiefpassfilters (TP) mit Eingängen eines Verknüpfungsglieds verbunden sind.

5. Vorrichtung nach Anspruch 1, **dadurch gekennzeichnet, dass** an dem wenigstens einen ersten Ausgang des Signalerzeugers (DSP) ein digitales Signal abgreifbar ist und dass die Schaltungsanordnung wenigstens einen Digital-Analog-Umsetzer aufweist, der einen Eingang hat, der mit dem wenigstens einen ersten Ausgang des Signalerzeugers (DSP) verbunden ist.

6. Vorrichtung nach Anspruch 5, **dadurch gekennzeichnet, dass** der wenigstens eine Digital-Analog-Umsetzer einen Ausgang hat, wobei an dem Ausgang des Digital-Analog-Umsetzer ein aus dem am Eingang des Digital-Analog-Umsetzers anliegenden digitalen Signal gewandeltes analoges Signal bereitstellbar ist.

7. Vorrichtung nach Anspruch 5, **dadurch gekennzeichnet, dass** der Ausgang des wenigstens einen Digital-Analog-Umsetzers ggf. unter Zwischenschaltung eines Tiefpassfilters (TP) mit einem Eingang des Verknüpfungsglieds verbunden ist.

8. Vorrichtung nach Anspruch 1, **dadurch gekennzeichnet, dass** der wenigstens eine zweite Ausgang ggf. unter Zwischenschaltung eines Tiefpassfilters (TP) mit einem Eingang des Verknüpfungsglieds verbunden ist.

9. Vorrichtung nach Anspruch 4 oder nach Anspruch 7 oder nach Anspruch 8 oder nach Anspruch 7 und 8, **dadurch gekennzeichnet, dass** die an den Eingängen des Verknüpfungsglieds bereitstellbaren analogen oder pulsweitenmodulierten Signale zu einem Steuersignal für den spannungsgesteuerten Oszillator (O) zusammensetzbar sind.

10. Verfahren zum Betreiben einer Vorrichtung nach Anspruch 9, **dadurch gekennzeichnet, dass** vom Signalerzeuger (DSP) zwei Signale erzeugt werden, die ggf. in ein analoges Signal gewandelt in dem Verknüpfungsglied zu einem Steuersignal für den spannungsgesteuerten Oszillator (O) zusammengesetzt werden, wobei das eine Signal eine periodische Kippschwingung oder periodische Dreieckschwingung mit einer ersten Frequenz beschreibt während das andere Signal periodisch aufeinanderfolgend zwei oder mehr aufeinander folgende Stufen mit einer zweiten Frequenz beschreibt, wobei die zweite Frequenz ein ganzzahliges Vielfaches der ersten Frequenz ist.
